# EUROPEAN PATENT SPECIFICATION

(11) **EP 2 727 234 B1**
(45) Date of publication and mention of the grant of the patent: **14.09.2016**
(21) Application number: 11728832.4
(22) Date of filing: 29.06.2011
(51) Int. Cl.: H02M 7/49, H02J 3/18, H02J 3/36

(54) **CONVERTER**
WANDLER
CONVERTISSEUR

(43) Date of publication of application: 07.05.2014
(73) Proprietor: General Electric Technology GmbH, 5400 Baden (CH)
(72) Inventor: TRAINER, David Reginald, Alvaston Derbyshire DE24 0AQ (GB); GREEN, Timothy Charles, Haywards Heath Sussex RH17 6HX (GB); MERLIN, Michael Marc Claude, F-91410 Dourdan (FR); SOTO-SANCHEZ, Diego, Cambridge Cambridgeshire CB3 0HL (GB)
(74) Representative: Ahner, Philippe
(86) International application number: PCT/EP2011/060907
(87) International publication number: WO 2013/000510

(56) References cited:
- WO-A1-2010/145689
- WO-A1-2011/012171
- US-A1- 2008 310 205
- US-A1- 2010 118 578

## Description

This invention relates to a power electronic converter for use in high voltage direct current (HVDC) power transmission and reactive power compensation.

The published patent application US2010118578 discloses a converter with three phases each consisting of series connected submodules.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks where it is necessary to interconnect AC networks operating at different frequencies. In any such power transmission network, converters are required at each interface between AC and DC power to effect the required conversion, and one such form of converter is a voltage source converter (VSC).

AC power is typically transmitted in the form of one or more sinusoidal waveforms depending on the number of AC phases. The presence of sinusoidal AC waveforms on the AC side of the voltage source converter can however lead to high levels of DC voltage ripple in the DC side of the voltage source converter and the associated DC network. The DC voltage ripples are typically multiples of the AC system frequency, e.g. 6^{th} harmonic, 12^{th} harmonic and so on.

The presence of DC ripple in the DC network is undesirable because it not only expends the voltage, current and thermal capacity of the DC transmission lines without providing any increase in power transfer, but also prevents the use of low cost cables, which are generally intolerant of alternating voltage stress, and thereby increases installation costs of DC power transmission lines.

In addition the interaction between DC ripple components from converter stations respectively connected to AC networks operating at different frequencies leads to the generation of complex cross-modulation frequencies in the associated AC and DC networks. Furthermore, the alternating nature of the DC ripple leads to undesirable interference between the DC power transmission lines and measuring transducers and control systems required for stable converter control, and between the DC power transmission lines and nearby telephone lines, which increases the complexity of designing the layout of DC power transmission lines.

Conventionally, power stations utilize DC filtering equipment such as passive inductive and capacitive elements on the DC side of the voltage source converter to minimise DC ripple. The use of parallel capacitance and series inductance in combination with the voltage source converter respectively leads to reduction of voltage and current ripple. The high voltage nature of power transmission however means that it is necessary to employ large passive inductive and capacitive elements. This not only increases power losses in normal operation and therefore lowering converter efficiency, but also adds to the size, weight and cost of the associated power station, which is particularly undesirable in locations with limited space envelopes such as off-shore wind farms.

In addition, passive filters have a fixed impedance against frequency characteristic and therefore cannot be adapted to accommodate changes in the DC side ripple frequency. Such changes may naturally occur when a converter station is required to temporarily operate in an abnormal operation mode or if additional VSC stations are joined in a meshed fashion to form a DC grid.

According to an aspect of the invention, there is provided a power electronic converter, for use in high voltage direct current power transmission and reactive power compensation, comprising at least one converter limb including first and second terminals being connectable to a DC network and a third terminal, the or each converter limb defining first and second limb portions connected in series between the third terminal and a respective one of the first and second terminals, each limb portion including a chain-link converter, each chain-link converter including a plurality of modules connected in series, each module including at least one primary switching element connected to at least one energy storage device, the converter being configured to control the or each converter limb to simultaneously switch both limb portions into circuit to selectively define a circulation path carrying an AC circulation current for presentation to the DC network to minimise DC ripple in a DC voltage presented to the DC network.

The provision of one or more converter limbs that are able to selectively define a circulation path which carries an AC circulation current to minimise DC ripple in the DC voltage presented to the DC network removes the need for separate DC filtering equipment on the DC side of the power electronic converter. As a result the power electronic converter of the invention is cheaper, smaller and lighter than conventional power converters, as well as being simpler to operate and control and being more efficient.

The ability to define a circulation path carrying an AC circulation current therefore results in a power electronic converter with active filtering capability that is compatible with a wide range of real and reactive power operating conditions.

Preferably each limb portion further includes at least one secondary switching element connected in series with the chain-link converter, the at least one secondary switching element being controllable to selectively switch the respective limb portion in or out of circuit.

The series combination of one or more secondary switching elements connected in series with the chain-link converter in each limb portion to switch the limb portion in and out of circuit between the third terminal and either the first or second terminal is advantageous because it reduces the voltage range that each chain-link converter would be required to generate. This in turn allows the number of components in each chain-link converter to be minimized.

The creation of such a circulation path provides the option of minimising DC ripple in a DC voltage presented to the DC network.

In such embodiments at least two converter limbs may be controllable at the same time to simultaneously switch the respective both limb portions into circuit to define the circulation path.

Controlling two or more converter limbs in this manner to define the circulation path increases the smoothness of individual converter limb currents, which in turn become easier to control.

In other such embodiments the converter limbs may be sequentially controllable to simultaneously switch the respective both limb portions into circuit to define the circulation path.

This feature allows the power electronic converter to continuously or periodically define the circulation path throughout the operation of the power electronic converter.

Each converter limb is preferably controllable to selectively define the circulation path for a predetermined overlap period to control the duration for which the AC circulation current flows. The extent of the overlap period may vary, depending on the design requirements of the power electronic converter and the nature of the DC ripple in the DC network.

In other embodiments of the invention, the circulation path may include at least one current modifier to modify the AC circulation current.

The inclusion of one or more current modifiers provides a further option for controlling the extent to which DC ripple is minimised without the need for separate DC filtering equipment.

The current modifier may modify the magnitude of the AC circulation current to minimise DC ripple in the DC voltage presented to the DC network.

In such embodiments, the or each current modifier may be or may include at least one of the chain-link converters and at least one primary inductor connected in series with the or each chain-link converter, the or each chain-link converter being operable to vary its voltage to alter the voltage across the or each primary inductor and thereby modify the magnitude of the AC circulation current.

Such an arrangement readily allows the DC ripple in the DC network to be minimised without the need for separate DC filtering equipment.

In other such embodiments, the or each current modifier may be or may include at least one variable primary inductor, the or each variable primary inductor being controllable to vary its inductance to modify the AC circulation current.

One or more such variable primary inductors can be used to provide active control over the DC filtering procedure.

The or each primary switching element of each module of each chain-link converter may be controllable to configure the respective chain-link converter to provide a stepped variable voltage source.

The structure of the chain-link converter allows each of the chain-link converters to provide a voltage that may be increased in incremental steps by the insertion of additional modules into the chain so as to provide a voltage that is higher than the voltage provided by each individual module. This arrangement therefore allows the voltage provided by the chain-link converter of each limb portion to be varied and thereby enables the chain-link converter to generate complex voltage waveforms.

In further embodiments the third terminal of the or each converter limb is connectable to a respective phase of an AC network. In such embodiments, the chain-link converters are controllable to generate an AC voltage waveform at the respective third terminal.

Such features allow the power electronic converter to carry out rectification and inversion processes so as to facilitate power conversion between the AC and DC networks.

Preferably each chain-link converter is operable to vary its voltage so as to generate an AC voltage waveform at the respective third terminal while a circulation path is defined.

The power electronic converter according to the invention has been found to be capable of minimising DC ripple in the DC network whilst facilitating power conversion between the AC and DC networks.

Each converter limb is preferably controllable to define the circulation path for part or all of a cycle of the AC voltage waveform.

The duration of the circulation path during a single cycle of the AC voltage waveform may vary, depending on the design requirements of the power electronic converter and the specified acceptable limits of DC ripple.

Preferably the AC voltage waveform is a near approximation of a sinusoidal waveform.

The generation of an AC current in the form of a near-perfect sine-wave, with minimal harmonic distortion, means that there is no requirement for harmonic filters on the AC side of the power electronic converter to control power quality.

In embodiments of the invention each chain-link converter is controllable to inject one or more zero phase sequence triplen harmonic components into the AC voltage waveform.

The injection of zero phase sequence triplen harmonic components into the AC voltage waveform reduces the voltage rating of each chain-link converter required to enable the or each converter limb to define a circulation path. This does not affect the line-to-line voltage appearing at the AC network.

In other embodiments of the invention at least one module may include a plurality of series-connected primary switching elements connected in parallel with a respective energy storage device.

To define a 2-quadrant unipolar module that can provide zero or positive voltage and can conduct current in two directions, the plurality of series-connected primary switching elements may be connected in parallel with the respective energy storage device in a half-bridge arrangement

To define a 4-quadrant bipolar module that can provide zero, positive or negative voltage and can conduct current in two directions, the plurality of series-connected primary switching elements may be connected in parallel with the respective energy storage device in a full-bridge arrangement.

At least one switching element preferably includes at least one semiconductor device.

The or at least one semiconductor device may be, for example, an insulated gate bipolar transistor, a gate turn-off thyristor, a field effect transistor, an injection enhanced gate thyristor or an integrated gate commutated thyristor.

At least one switching element preferably includes an anti-parallel diode connected in parallel with the or each corresponding semiconductor device.

The use of semiconductor devices is advantageous because such devices are small in size and weight and have relatively low power dissipation, which minimises the need for cooling equipment. Their use therefore leads to significant reductions in power converter cost, size and weight.

In addition the fast switching capabilities of such semiconductor devices allow the power electronic converter to synthesize complex waveforms for injection into the AC side and/or DC side of the power electronic converter. The injection of such complex waveforms can be used, for example, to minimise the levels of harmonic distortion typically associated with line-commutated thyristor-based power electronic converters.

Preferably at least one energy storage device is or includes a capacitor, a fuel cell, a battery or any device that is capable of storing and releasing its electrical energy to provide a voltage.

This flexibility is useful in designing power electronic converters in different locations where the availability of equipment may vary due to locality or transport difficulties. For example, on offshore wind farms, the energy storage device may be an auxiliary AC generator connected to a wind turbine.

In other embodiments of the invention, each limb portion of a respective converter limb is controllable to selectively define a circulation path carrying an DC circulation current to regulate the energy level of at least one energy storage device in a respective chain-link converter.

The creation of such a circulation path provides an option for regulating the energy level of all or some of the energy storage devices in each chain-link converter.

In such embodiments employing the use of at least one current modifier, the or each current modifier may be controllable to modify the magnitude of the DC circulation current to minimise any deviation in voltage of the or each energy storage device from a predetermined voltage level.

The regulation of voltage levels of one or more energy storage devices provides the option of balancing the voltage levels of respective modules. This is advantageous because it means that the voltage of any particular module can be kept approximately equal to an average module voltage to help ensure module components are operated within their design voltage limits and the combined modules are capable of generating the appropriate range of converter terminal voltage to satisfy steady-state operation and fault responses.

Each limb portion of a respective converter limb is preferably controllable to selectively define a circulation path carrying a combination of the AC and DC circulation currents.

The ability to define a circulation path to carry a combination of the AC and DC circulation currents increases the size of the real-reactive power envelope of the power electronic converter.

Preferably the power electronic converter includes multiple converter limbs.

The provision of multiple converter limbs renders the power electronic converter compatible for use with multi-phase AC networks.

Preferred embodiments of the invention will now be described, by way of non-limiting examples, with reference to the accompanying drawings in which:
Figure 1 shows, in schematic form, a power electronic converter according to a first embodiment of the invention;
Figure 2 shows the change in limb portion currents in a power electronic converter interconnecting a DC network and a three-phase AC network, the corresponding DC current and DC ripple in the DC network and the overlap periods during which the respective converter limb is controlled to define a circulation path carrying an AC circulation current;
Figure 3 illustrate the modification of a limb portion current to minimise DC ripple;
Figure 4 illustrates the control of two converter limbs at the same time to simultaneously switch their respective both limb portions into circuit to define the circulation path;
Figure 5 illustrates the modification of a limb portion current when two converter limbs are controlled at the same time to simultaneously switch their respective both limb portions into circuit to define the circulation path;
Figure 6 shows the shape of the modified limb portion currents and the corresponding DC current of the DC network;
Figure 7 shows the shape of the modified limb portion currents and the corresponding AC current waveform at the third terminal;
Figure 8 shows the increase in voltage rating requirement of a chain-link converter while a circulation path is defined;
Figure 9 shows the reduction in voltage rating requirement of a chain-link converter when a zero phase sequence 3rd harmonic component is injected into the AC voltage waveform;
Figure 10 shows the reduction in voltage rating requirement of a chain-link converter when zero phase sequence higher triplen harmonic components are injected into the AC voltage waveform; and
Figure 11 shows a power electronic converter according to a second embodiment of the invention.

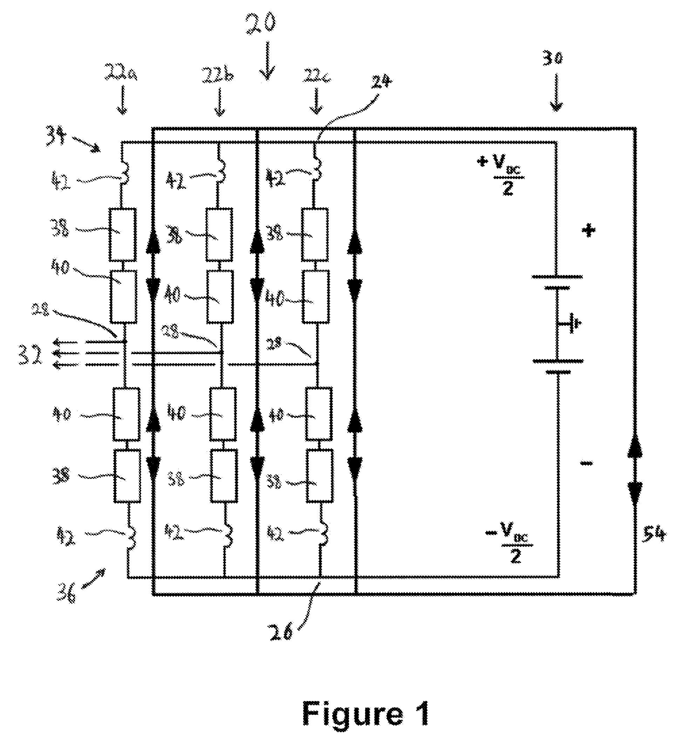

A power electronic converter 20 according to a first embodiment of the invention is shown in Figure 1.

The power electronic converter 20 comprises first, second and third converter limbs 22a,22b,22c. Each converter limb 22a,22b,22c includes first and second terminals 24,26 and a third terminal 28.

In use, the first and second terminals 24,26 of each converter limb 22a,22b,22c are respectively connected to positive and negative terminals of a DC network 30, the positive and negative terminals respectively carrying voltages of +Vdc/2 and -Vdc/2, while the third terminal 28 of each converter limb 22a,22b,22c is connected to a respective phase of a three-phase AC network 32.

Each converter limb 22a,22b,22c defines first and second limb portions 34,36. In each converter limb 22a,22b,22c, the first limb portion 34 is connected in series between the third terminal 28 and the first terminal 24 while the second limb portion 36 is connected in series between the third terminal 28 and the second terminal 26.

Each limb portion 34,36 further includes a chain-link converter 38. Each chain-link converter 38 includes a chain of modules (not shown) connected in series. The number of modules in each chain-link converter 38 depends on the required voltage rating of the respective limb portion 34,36.

Each module of each chain-link converter 38 includes two pairs of primary switching elements connected in parallel with a capacitor to define a 4-quadrant bipolar module that can provide negative, zero or positive voltage and can conduct current in two directions.

Each limb portion 34,36 further includes a secondary switching element 40 connected in series with the respective chain-link converter 38. In other embodiments, it is envisaged that the number of secondary switching elements in each limb portion may vary, depending on the required voltage rating of each limb portion.

The series connection between the secondary switching element 40 and the chain-link converter 38 of each of the first and second limb portions 34,36 allows, in other embodiments of the invention, the secondary switching element 40 and the chain-link converter 38 to be connected in a reverse order between the third terminal 28 and the respective first or second terminal 24,26.

Each limb portion 34,36 further includes a primary inductor 42 that is connected in series with the chain-link converter 38 and the secondary switching element 40. The primary inductor 42 of each limb portion 34,36 helps to limit transient current flow between the capacitors in the modules of each chain-link converter 38 and any other parallel connected capacitor, and thereby minimises energy losses.

The power electronic converter 20 further includes a secondary inductor or transformer (not shown) connected in series with each third terminal 28 of the converter limb 22a,22b,22c for connection in use between each third terminal 28 and the AC network 32. The secondary inductor or transformer regulates the AC current flowing between each third terminal 28 and the AC network 32.

The primary switching elements of the modules of each chain-link converter 38 are operable to configure each chain-link converter 38 to provide a stepped variable voltage source. The primary switching elements are also switched at near to the fundamental frequency of the AC network 32.

The capacitor of each module may be bypassed or inserted into the respective chain-link converter 38 by changing the state of the primary switching elements.

The capacitor of each module is bypassed when the pairs of primary switching elements are configured to form a short circuit in the module. This causes the current in the power electronic converter 20 to pass through the short circuit and bypass the capacitor, and so the module is able to provide a zero voltage.

The capacitor of each module is inserted into the respective chain-link converter 38 when the pair of primary switching elements is configured to allow the converter current to flow into and out of the capacitor. The capacitor is then able to charge or to discharge its stored energy so as to provide a voltage. The bidirectional nature of the 4-quadrant bipolar module means that the capacitor may be inserted into the module in either forward or reverse directions so as to provide a positive or negative voltage.

It is therefore possible to build up a combined voltage across each chain-link converter 38 which is higher than the voltage available from each individual module via the insertion of the capacitors of multiple modules, each providing its own voltage, into the chain-link converter 38.

The ability of a 4-quadrant bipolar module to provide positive or negative voltages means that the voltage across each chain-link converter 38 may be built up from a combination of modules providing positive or negative voltages. The energy levels in individual capacitors may be maintained therefore at optimal levels by controlling the modules to alternate between providing positive or negative voltage.

In other embodiments of the invention (not shown), it is envisaged that each module of each chain-link converter may include a set of series-connected primary switching elements connected in parallel with the respective capacitor in a half-bridge arrangement to define a 2-quadrant unipolar module that can provide zero or positive voltage and can conduct current in two directions.

It is possible to vary the timing of switching operations for each module such that the insertion and/or bypass of the capacitors of individual modules in the chain-link converter 38 results in the generation of a voltage waveform. For example, insertion of the capacitors of the individual modules may be staggered to generate a sinusoidal waveform. Other waveform shapes may be generated by adjusting the timing of switching operations for each module in the chain-link converter 38.

Each of the primary and secondary switching elements 40 is an insulated gate bipolar transistor (IGBT) connected in parallel with an anti-parallel diode. In other embodiments of the invention (not shown) one or more of the primary and secondary switching elements may include a different semiconductor device, such as a field effect transistor, a gate-turn-off thyristor, an injection gate enhanced thyristor, an integrated gate commutated transistor or other forced commutated or self commutated semiconductor switches, the semiconductor device preferably being connected in parallel with an anti-parallel diode.

The fast switching capabilities of the aforementioned semiconductor devices allows the power electronic converter 20 to synthesize complex waveforms for injection into the AC side and/or DC side of the power electronic converter 20. The injection of such complex waveforms can be used, for example, to minimise the levels of harmonic distortion typically associated with line-commutated thyristor-based voltage source converters.

It is also envisaged that in other embodiments of the invention (not shown), the capacitor of each module may be replaced by a different energy storage device such as a fuel cell, a battery or any other energy storage device capable of storing and releasing its electrical energy to provide a voltage.

In use, the secondary switching elements 40 of the first and second limb portions 34,36 of each converter limb 22a,22b,22c are operable to switch each of the chain-link converters 38 in and out of circuit between the third terminal 28 and the respective first or second terminal 24,26. The chain-link converters 38 are also operable to generate a voltage waveform at the respective third terminal 28 to facilitate power conversion between the AC and DC networks 32,30.

To generate the positive half-cycle of the AC voltage waveform at the respective third terminal 28, the first limb portion 34 is switched into circuit while the second limb portion 36 is switched out of circuit and the chain-link converter 38 of the first limb portion 34 is controlled to vary its voltage. The chain-link converter voltage is varied to offset the voltage at the first terminal 24, and thereby synthesize a positive half-sine wave at the third terminal 28.

To generate the negative half-cycle of the AC voltage waveform, the first limb portion 34 is switched out of circuit while the second limb portion 36 is switched into circuit and the chain-link converter 38 of the second limb portion 36 is controlled to vary its voltage. The voltage of the chain-link converter is again varied to offset the voltage at the second terminal 26, and thereby synthesize a negative half-sine wave at the third terminal 28.

The chain-link converters 38 are preferably operable to generate a sinusoidal voltage waveform using a step-wise approximation. The chain-link converters 38 are suitable for use in step-wise waveform generation due to their ability to provide voltage steps to increase or decrease the output voltage at the respective third terminal 28. The step-wise approximation of the voltage waveform may be improved by using a higher number of modules with lower voltage levels to increase the number of voltage steps.

The chain-link converters 38 of each converter limb 22a,22b,22c is controlled to generate an sinusoidal voltage waveform, as set out above, that has a phase difference of 120 electrical degrees to the AC voltage waveforms generated by the chain-link converters 38 of the other two converter limbs 22a,22b,22c. This allows the power electronic converter 20 to facilitate power conversion between the DC network 30 and the three-phase AC network 32.

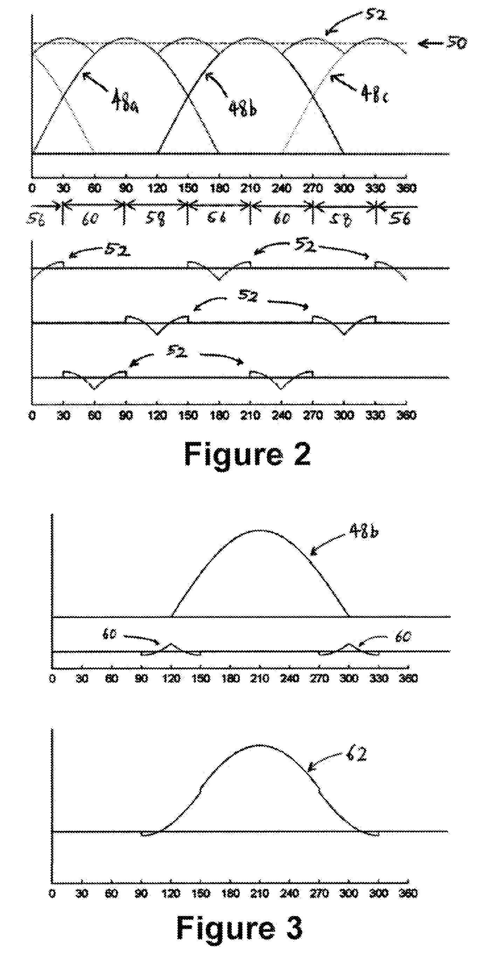

Figure 2 shows the change in current in the first limb portion of each converter limb over a single AC cycle of the AC network during power conversion between the DC network and the three-phase AC network. The first limb portions of the first, second and third converter limbs respectively conduct a half-sine wave current 48a,48b,48c over: 0 to 180 electrical degrees; 120 to 300 electrical degrees; and 240 to 360 and 0 to 60 electrical degrees of the AC cycle of the AC network. The summation of the half-sine wave currents flowing in the first limb portions results in the presentation of an average DC current 50 to the connected DC network over the AC cycle of the AC network. The sinusoidal shape of the AC voltage waveforms results in the presence of DC ripple 52 in the DC current 50.

To minimise DC ripple in the DC current, the converter limbs 22a,22b,22c of the power electronic converter 20 is configured to operate as follows with reference to Figure 1.

In use, each converter limb 22a,22b,22c is controllable to simultaneously switch both limb portions 34,36 into circuit to define a circulation path carrying an AC circulation current 54, an example of which is shown in Figure 1.

Each converter limb 22a,22b,22c is controlled, in use, to selectively define a circulation path for an overlap period of 60 electrical degrees and is applied at the zero crossing points of the current in the respective first limb portion 34 so that each overlap period corresponds to a specific DC ripple component. As illustrated in Figure 2, the first converter limb 22a is controlled to switch both limb portions 34,36 into circuit for overlap periods 56 extending from 150 to 210 and 330 to 30 electrical degrees of the power cycle, the second converter limb 22b is controlled to switch both limb portions 34,36 into circuit for overlap periods 58 extending from 90 to 150 and 270 to 330 electrical degrees of the power cycle and the third converter limb 22c is controlled to switch both limb portions 34,36 into circuit for overlap periods 60 extending from 30 to 90 and 210 to 270 electrical degrees of the AC cycle. Such sequential control of the converter limbs 22a,22b,22c allows the power electronic converter 20 to continuously maintain a circulation path carrying an AC circulation current.

The control of the converter limbs 22a,22b,22c to define the circulation path has the effect of extending the duration of conduction of each first limb portion 34 from 180 electrical degrees to 240 electrical degrees.

During each overlap period the circulation path carries an AC circulation current that flows within the circulation path, the AC circulation current including an AC component that is anti-phase to the specific DC ripple component corresponding to the respective overlap period. This in turns modifies the shape of the current flowing in the first limb portion 34 of the converter limb 22a,22b,22c such that the shape of the modified first limb portion current 62 is a superposition of the original half-sine wave component 48b and the AC component 60, as seen in Figure 3. Such modification of the current flowing in each first limb portion 34 means that the summation of the modified currents flowing in the first limb portions 34 results in the cancellation of the DC ripple in the DC current, and thereby results in the presentation of a constant DC current to the connected DC network 30.

Preferably the magnitude of the AC circulation current is varied by operating each chain-link converter 38 to insert or bypass its modules so as to vary the voltage across the respective chain-link converter 38 and in turn vary the voltage across the associated primary inductor. In this regard each chain-link converter 38 and the or each associated primary inductor 42 together act as a current modifier. The ability of each chain-link converter 38 to generate complex voltage waveforms as outlined above allows the AC circulation current to be modified accurately to fit the requirements of the DC ripple filtering procedure.

As an alternative to the use of at least one chain-link converter 38 to alter the magnitude of the AC circulation current, it is envisaged that other embodiments of the invention (not shown) may include a different current modifier in the form of a variable primary inductor. Such a variable primary inductor would be operable to vary its inductance so as to directly vary the voltage thereacross, and hence the magnitude of the AC circulation current flowing therethrough.

The overlap period may be varied, depending on the design requirements of the power electronic converter 20 and the nature of the DC ripple in the DC current of the DC network 30.

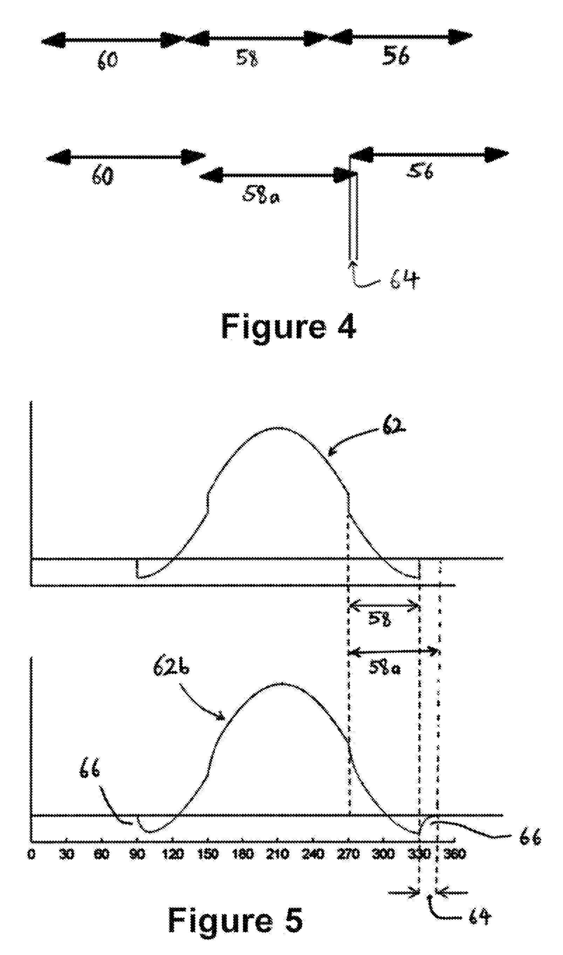

For example, as seen in Figure 4, each of the first and third converter limbs 22a,22c are controlled, in use, to define a circulation path for an overlap period 56,60 of 60 electrical degrees, and the second converter limbs 22b are controlled, in use, to define a circulation path for an overlap period 58a of more than 60 electrical degrees. The increase in length 64 in overlap period of the second converter limb 22b results in the first and second converter limbs 22a,22b temporarily having their respective both limb portions 34,36 switched into circuit at the same time.

The increase in length 64 in overlap period 58 to define an extended overlap period 58a as set out above allows the current 62 to be modified to have a more gradual shape at both ends 66 of the modified current waveform 62a and at the 150 and 270 degree points of the AC cycle, as seen in Figure 5. This improves the smoothness of the current flowing in the respective first limb portion 34, which results in a more easily controlled current.

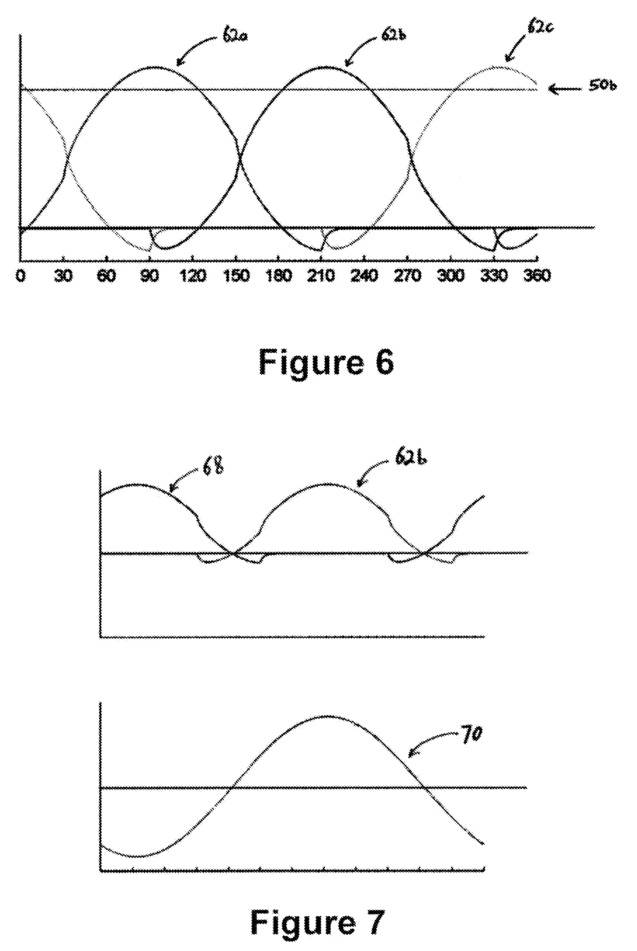

The effect of extending the overlap period with respect to each converter limb 22a,22b,22c can be seen in Figure 6, which shows each current 62a,62b,62c flowing in the respective first limb portion 34 having a smoother shape. Similarly the overlap period with respect to each converter limb 22a,22b,22c may be extended to modify the current 68 flowing in the respective second limb portion 36 to have a smoother shape. It has been found that the extension of the overlap period to improve the smoothness of the current does not affect the cancellation of DC ripple in the DC current 50b, and does not introduce any distortions in the shape of the AC current waveform 70 flowing between the respective third terminal 28 and the AC network 32.

It is envisaged that the overlap period with respect to one or more converter limbs 22a,22b,22c might be reduced so that a circulation path carrying an AC circulation current is defined for only part of the AC cycle of the AC network 32. This results in partial filtering of the DC ripple in the DC current of the DC network 30. This is advantageous in circumstances where the DC ripple only needs to be minimised to within specified acceptable limits, because such partial filtering has been found to reduce the required voltage rating of the chain-link converters 38 in the power electronic converter 20.

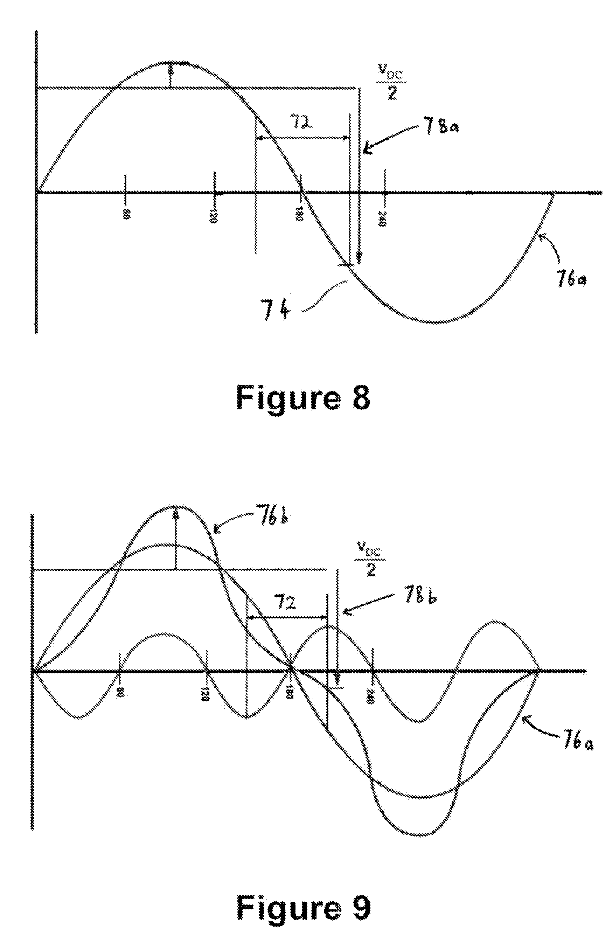

The extension of the duration of conduction of each limb portion 34,36 from 180 electrical degrees to 240 electrical degrees has been found to increase the required voltage rating of each chain-link converter 38. This is because, in Figure 8, during the overlap period 72, the respective first limb portion 34 is now switched into circuit, instead of being switched out of circuit, during the generation of the negative half-cycle 74 of the AC voltage waveform 76a. Similarly the respective second limb portion 36 is now switched into circuit, instead of being switched out of circuit, during the generation of the positive half-cycle of the AC voltage waveform. Consequently the chain-link converter 38 of each limb portion 34,36 is required to have an increased voltage rating to offset a larger voltage difference 78a between the third terminal 28 and the first or second terminal 24,26, as seen in Figure 8.

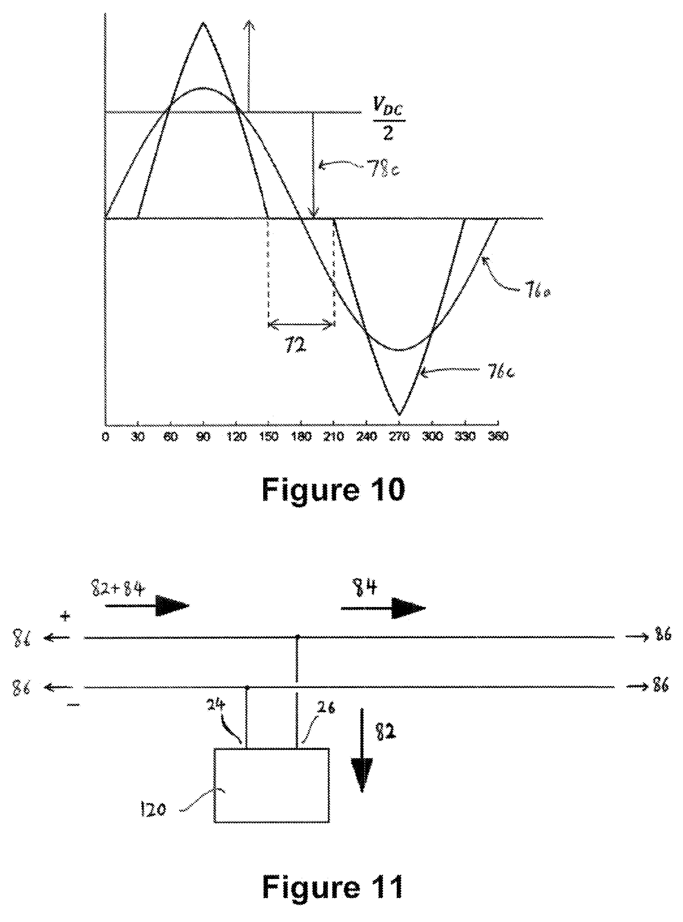

In use, each chain-link converter 38 is controlled to inject a zero phase sequence third harmonic component into the AC voltage waveform at the respective third terminal 28. This results in a modified AC voltage waveform 76b so that the voltage difference 78b between the third terminal 28 and the first or second terminal 24,26 is reduced during the overlap period 72, as shown in Figure 9. Zero phase sequence higher triplen harmonic components may be injected in the same manner to modify the AC voltage waveform 76c at the respective third terminal 28 so that the voltage difference 78c between the third terminal 28 and the first or second terminal 24,26 during the overlap period 72 is negligible, as shown in Figure 10.

Modulation of the AC voltage waveform at the third terminal 28 as set out above therefore reduces the voltage rating of each chain-link converter 38 required to enable the respective converter limb 22a,22b,22c to define a circulation path. Such modulation does not affect the line-to-line voltage appearing at the AC network 32 if the third terminals 28 and the AC network 32 are interconnected so that the AC phase voltages and the DC voltage are decoupled to allow the DC current to be varied while the AC phase currents remain unchanged.

During the operation of the power electronic converter 20 to convert AC power to DC power and vice versa, the power levels on the AC and DC sides of the power electronic converter 20 may vary depending on the real and reactive power requirements of the connected three-phase AC and DC networks 32,30.

When the power levels on the AC and DC sides of the power electronic converter 20 are unequal, each chain-link converter 38 imports or exports real power during the power conversion process. This can result in an increase or decrease in energy level of each chain-link converter 38 over time. These variations in energy level may lead to each module being either completely discharged or damaged from excessive voltage levels. The variations may also lead to failure of the chain-link converters 38 to synthesize specific voltage waveforms at the respective third terminal 28.

It is desirable, therefore, to maintain a net zero energy change in each chain-link converter 38 over time. To achieve such a net zero energy change the power electronic converter 20 is configured to operate as follows, with reference to Figure 1.

In use, each converter limb 22a,22b,22c is controllable to simultaneously switch both limb portions 34,36 into circuit to define a circulation path carrying an DC circulation current.

During the overlap period the circulation path carries a DC circulation current that flows within the circulation path. The DC circulation current restores depleted charge or removes excessive charge from any capacitor in a respective module of each chain-link converter 38 that has an energy level which deviates from a desired value. As a result the DC circulation current is able to maintain a net zero energy change in each chain-link converter 38.

In particular, during the overlap period, each chain-link converter 38 is controlled to insert one or more of its modules having a voltage that deviates from the desired average value (or falls outside a desired operating range). Each module may be inserted in a forward or reverse direction, depending on the voltage level of each module, with the insertion of such modules allowing the DC circulation current to flow through the inserted modules so as to either restore the depleted energy in the respective capacitor or remove excessive energy from the respective capacitor, as may be necessary.

Any capacitors in a given chain-link converter 38 that are already at the desired energy level may be bypassed.

In a preferred embodiment of the invention capacitor energy regulation, i.e. capacitor charge removal or restoration, is controlled by varying the duration of the overlap period and/or the magnitude of the DC circulation current.

The magnitude of the DC circulation current is modified as set out above by using each chain-link converter 38 and the or each associated primary inductor 42 as a current modifier. As an alternative to the use of at least one chain-link converter 38 to alter the magnitude of the DC circulation current, it is envisaged that other embodiments of the invention (not shown) may include a different current modifier in the form of a variable primary inductor to modify the magnitude of the DC circulation current as set out above.

The regulation of voltage levels of one or more energy storage devices provides the option of balancing the voltage levels of respective modules. This is advantageous because it means that the voltage of any particular module can be kept approximately equal to an average module voltage to help ensure module components are operated within their design voltage limits and the combined modules are capable of generating the appropriate range of converter terminal voltage to satisfy steady-state operation and fault responses.

Each limb portion 34,36 of the converter limbs 22a,22b,22c is preferably controllable to selectively define a circulation path carrying a combination of the AC and DC circulation currents.

The provision of converter limbs 22a,22b,22c that are able to selectively define a circulation path which carries a combination of AC and DC circulation currents therefore allows the power electronic converter 20 to not only minimise DC ripple in the DC voltage presented to the DC network 30, but also regulate the energy level of one or more energy storage devices in a respective chain-link converter 38.

In addition, the power electronic converter 20 according to the invention has been found to be capable of minimising DC ripple in the DC network 30 whilst facilitating power conversion between the AC and DC networks 32,30. Furthermore the operation of the power electronic converter 20 to minimise DC ripple as set out above has negligible effect on the shape and magnitude of the AC phase voltages and currents.

This removes the need for separate DC filtering equipment and energy balancing equipment on the DC side of the power electronic converter 20. As a result the power electronic converter 20 of the invention is cheaper, smaller and lighter than conventional power converters, as well as being simpler to operate and control and being more efficient.

Moreover the ability to define a circulation path carrying a combination of AC and DC circulation currents results in a power electronic converter 20 with active filtering capability that is compatible with a wide range of real and reactive power operating conditions. In particular, the use of chain-link converters 38 in the power electronic converter 20 is advantageous because the ability of the chain-link converters 38 to generate complex waveforms allows the active filtering capability of the power electronic converter 20 to be optimised to cope with changing real and reactive power conditions.

A power electronic converter 120 according to a second embodiment of the invention is shown in Figure 11. The power electronic converter 120 in Figure 11 is similar in structure and operation to the power electronic converter 20 in Figure 1, except that each third terminal of the power electronic converter in Figure 11 is not connected to an AC network.

In use, the first and second terminals 24,26 of each converter limb are respectively connected to positive and negative DC transmission lines 80, the positive and negative DC transmission lines respectively carrying voltages of +Vdc/2 and -Vdc/2.

The converter limbs are controlled as set out above with reference to the power electronic converter of Figure 1 to define the circulation path carrying an AC circulation current, which includes an AC component that is anti-phase to the pre-existing harmonic ripple current 82 in the current 84 flowing in the DC transmission lines 80. This allows the power electronic converter 120 to cancel DC ripple current 82 generated by other loads or sources 86 connected to the DC transmission lines 80.

It is envisaged that in other embodiments, the power electronic converter may include any number of converter limbs, each converter limb including an AC terminal for connection in use to a respective phase of a multiphase AC network.

## Claims

1. A power electronic converter (20), for use in high voltage direct current power transmission and reactive power compensation, comprising at least one converter limb (22a, 22b, 22c) including first and second terminals (24, 26) being connectable to a DC network (30) and a third terminal (28), the or each converter limb (22a, 22b, 22c) defining first and second limb portions (34, 36) connected in series between the third terminal (28) and a respective one of the first and second terminals (24, 26), each limb portion (34, 36) including a chain-link converter (38), each chain-link converter (38) including a plurality of modules connected in series, each module including at least one primary switching element connected to at least one energy storage device, the converter (20) being configured to control the or each converter limb (22a, 22b, 22c) to simultaneously switch both limb portions (34, 36) into circuit to selectively define a circulation path carrying an AC circulation current (54) for presentation to the DC network (30) to minimise DC ripple in a DC voltage presented to the DC network (30).

2. A power electronic converter (20) according to Claim 1 wherein each limb portion (34, 36) further includes at least one secondary switching element connected in series with the chain-link converter (38), the at least one secondary switching element being controllable to selectively switch the respective limb portion in or out of circuit.

3. A power electronic converter (20) according to Claim 1 or 2 wherein at least two converter limbs (22a, 22b, 22c) are controllable at the same time to simultaneously switch the respective both limb portions (34, 36) into circuit to define the circulation path.

4. A power electronic converter (20) according to any of claims 1 to 3 wherein the converter limbs (22a, 22b, 22c) are sequentially controllable to simultaneously switch the respective both limb portions (34, 36) into circuit to define the circulation path.

5. A power electronic converter (20) according to any preceding claim wherein each converter limb (22a, 22b, 22c) is controllable to selectively define the circulation path for a predetermined overlap period to control the duration for which the AC circulation current flows.

6. A power electronic converter (20) according to any preceding claim wherein the circulation path includes at least one current modifier to modify the AC circulation current.

7. A power electronic converter (20) according to Claim 6 wherein the or each current modifier is or includes at least one of the chain-link converters and at least one primary inductor connected in series with the or each chain-link converter, the or each chain-link converter being operable to vary its voltage to alter the voltage cross the or each primary inductor and thereby modify the magnitude of the AC circulation current.

8. A power electronic converter (20) according to Claim 6 or Claim 7 wherein the or each current modifier is or includes at least one variable primary inductor, the or each variable primary inductor being controllable to vary its inductance to modify the AC circulation current.

9. A power electronic converter (20) according to any preceding claim wherein the or each primary switching element of each module of each chain-link converter (38) is controllable to configure the respective chain-link converter to provide a stepped variable voltage source.

10. A power electronic converter (20) according to any preceding claim wherein the third terminal (28) of the or each converter limb (22a, 22b, 22c) is connectable to a respective phase of an AC network.

11. A power electronic converter (20) according to Claim 10 wherein the chain-link converters (38) are controllable to generate an AC voltage waveform at the respective third terminal.

12. A power electronic converter (20) according to Claim 11 wherein each chain-link converter (38) is operable to vary its voltage so as to generate an AC voltage waveform at the respective third terminal (28) while a circulation path is defined.

13. A power electronic converter according to Claim 11 or Claim 12 wherein each converter limb (22a, 22b, 22c) is controllable to define the circulation path for part or all of a cycle of the AC voltage waveform.

14. A power electronic converter (20) according to any of Claims 11 to 13 wherein the AC voltage waveform is a near approximation of a sinusoidal waveform.

15. A power electronic converter (20) according to any of Claims 11 to 14 wherein each chain-link converter (38) is controllable to inject one or more zero phase sequence triplen harmonic components into the AC voltage waveform.

16. A power electronic converter (20) according to any preceding claim wherein at least one module includes a plurality of series-connected primary switching elements connected in parallel with a respective energy storage device.

17. A power electronic converter (20) according to Claim 16 wherein the plurality of series-connected primary switching elements are connected in parallel with the respective energy storage device in a half-bridge arrangement to define a 2-quadrant unipolar module that can provide zero or positive voltage and can conduct current in two directions.

18. A power electronic converter (20) according to Claim 16 or Claim 17 wherein the plurality of series-connected primary switching elements are connected in parallel with the respective energy storage device in a full-bridge arrangement to define a 4-quadrant bipolar module that can provide zero, positive or negative voltage and can conduct current in two directions.

19. A power electronic converter (20) according to any preceding claim wherein at least one switching element includes at least one semiconductor device.

20. A power electronic converter (20) according to Claim 19 wherein the or at least one semiconductor device is an insulated gate bipolar transistor, a gate turn-off thyristor, a field effect transistor, an injection enhanced gate thyristor or an integrated gate commutated thyristor.

21. A power electronic converter (20) according to Claim 19 or Claim 20 wherein at least one switching element further includes an anti-parallel diode connected in parallel with the or each corresponding semiconductor device.

22. A power electronic converter (20) according to any preceding claim wherein at least one energy storage device is or includes a capacitor, a fuel cell or a battery.

23. A power electronic converter (20) according to any preceding claim wherein each limb portion (34, 36) of a respective converter limb (22a, 22b, 22c) is controllable to selectively define a circulation path carrying an DC circulation current to regulate the energy level of at least one energy storage device in a respective chain-link converter.

24. A power electronic converter (20) according to Claim 23 when dependent from Claim 6 wherein the or each current modifier is controllable to modify the magnitude of the DC circulation current to minimise any deviation in voltage of the or each energy storage device from a predetermined voltage level.

25. A power electronic converter (20) according to Claim 23 or Claim 24 wherein each limb portion of a respective converter limb is controllable to selectively define a circulation path carrying a combination of the AC and DC circulation currents.

26. A power electronic converter (20) according to any preceding claim including multiple converter limbs.

## Patentansprüche

1. Elektronischer Stromwandler (20) zur Verwendung bei Hochspannungs-Gleichstrom-Übertragung und reaktiver Stromkompensation, umfassend wenigstens einen Wandlerzweig (22a, 22b, 22c) mit ersten und zweiten Klemmen (24, 26), die an ein Gleichstromnetz (30) anschließbar sind, und mit einer dritten Klemme (28), wobei der oder jeder Wandlerzweig (22a, 22b, 22c) erste und zweite Zweigabschnitte (34, 36) bildet, die zwischen der dritten Klemme (28) und einer entsprechenden der ersten und zweiten Klemmen (24, 26) in Reihe geschaltet sind, wobei jeder Zweigabschnitt (34, 36) einen Kettengliedwandler (38) aufweist und jeder Kettengliedwandler (38) mit mehreren in Reihe geschalteten Modulen versehen ist, von denen jeder wenigstens ein primäres Schaltelement aufweist, das mit wenigstens einer Energiespeicher-Vorrichtung verbunden ist, wobei der Wandler (20) des weiteren so konfiguriert ist, daß er oder jeder Wandlerzweig (22a, 22b, 22c) gesteuert wird, um gleichzeitig beide Zweigabschnitte (34, 36) in den Schaltkreis einzuschalten und dadurch selektiv einen Zirkulationsweg zu bilden, der einen Wechselstrom-Zirkulationsstrom (54) schafft, und zwar mit dem Ziel, diesen dem Gleichstromnetz (30) auszusetzen, um dadurch die Gleichstromwelligkeit in einer Gleichstromspannung, die dem Gleichstromnetz (30) geboten wird, auf ein Mindestmaß zu beschränken.

2. Elektronischer Stromwandler (20) nach Anspruch 1, **dadurch gekennzeichnet, daß** der Zweigabschnitt (34, 36) des weiteren wenigstens ein sekundäres Schaltelement aufweist, das mit dem Kettengliedwandler (38) in Reihe geschaltet ist, und daß das wenigstens eine sekundäre Schaltelement steuerbar ist, um den entsprechenden Zweigabschnitt in den Schaltkreis wahlweise ein- oder auszuschalten.

3. Elektronischer Stromwandler (20) nach Anspruch 1 oder 2, **dadurch gekennzeichnet, daß** wenigstens zwei Wandlerzweige (22a, 22b, 22c) zur selben Zeit steuerbar sind, um die entsprechenden beiden Zweigabschnitte (34, 36) in dem Schaltkreis simultan einzuschalten und dadurch den Zirkulationsweg festzulegen.

4. Elektronischer Stromwandler (20) nach einem der Ansprüche 1 bis 3, **dadurch gekennzeichnet, daß** die Wandlerzweige (22a, 22b, 22c) aufeinanderfolgend steuerbar sind, um die entsprechenden beiden Zweigabschnitte (34) gleichzeitig in den Schaltkreis einzuschalten und dadurch den Zirkulationsweg festzulegen.

5. Elektronischer Stromwandler (20) nach einem der vorhergehenden Ansprüche, **dadurch gekennzeichnet, daß** jeder Wandlerzweig (22a, 22b, 22c) steuerbar ist, um den Zirkulationsweg für eine vorbestimmte Überlappungsperiode selektiv festzulegen und dadurch die Dauer zu steuern, während der der Wechselstrom-Zirkulationsstrom fließt.

6. Elektronischer Stromwandler (20) nach einem der vorhergehenden Ansprüche, **dadurch gekennzeichnet, daß** der Zirkulationsweg wenigstens einen Strommodifizierer aufweist, um den Wechselstrom-Zirkulationsstrom zu ändern.

7. Elektronischer Stromwandler (20) nach Anspruch 6, **dadurch gekennzeichnet, daß** der oder jeder Strommodifizierer wenigstens einer der Kettengliedwandler ist oder wenigstens einen der Kettengliedwandler aufweist sowie eine primäre Induktivität, die mit dem oder jedem Kettengliedwandler in Reihe geschaltet ist, wobei der oder jeder Kettengliedwandler so betreibbar ist, daß seine Spannung variiert wird, um die Spannung über der oder jeder primären Induktivität zu ändern und dadurch die Größe des Wechselstrom-Zirkulationsstroms zu modifizieren.

8. Elektronischer Stromwandler (20) nach Anspruch 6 oder 7, **dadurch gekennzeichnet, daß** der oder jeder Strommodifizierer wenigstens eine variable primäre Induktivität ist oder aufweist, und daß die oder jede variable primäre Induktivität steuerbar ist, um sie zu variieren und dadurch den Wechselstrom-Zirkulationsstrom zu modifizieren.

9. Elektronischer Stromwandler (20) nach einem der vorhergehenden Ansprüche, **dadurch gekennzeichnet, daß** das oder jedes primäre Schaltelement jedes Moduls jedes Kettengliedwandlers (38) steuerbar ist, um den entsprechenden Kettengliedwandler so zu konfigurieren, daß eine gestufte variable Spannungsquelle gebildet wird.

10. Elektronischer Stromwandler (20) nach einem der vorhergehenden Ansprüche, **dadurch gekennzeichnet, daß** die dritte Anschlußklemme (28) des oder jedes Wandlerzweigs (22a, 22b, 22c) an eine entsprechende Phase eines Wechselstromnetzes anschließbar ist.

11. Elektronischer Stromwandler (20) nach Anspruch 10, **dadurch gekennzeichnet, daß** die Kettengliedwandler (38) steuerbar sind, um an der entsprechenden dritten Klemme eine Wechselstrom-Spannungswellenform zu erzeugen.

12. Elektronischer Stromwandler (20) nach Anspruch 11, **dadurch gekennzeichnet, daß** jeder Kettengliedwandler (38) so betreibbar ist, daß seine Spannung so variiert wird, daß an der entsprechenden dritten Klemme (28) während ein Zirkulationsweg bestimmt wird, eine Wechselstrom-Spannungswellenform erzeugt wird.

13. Elektronischer Stromwandler (20) nach Anspruch 11 oder Anspruch 12, **dadurch gekennzeichnet, daß** jeder Wandlerzweig (22a, 22b, 22c) steuerbar ist, um den Zirkulationsweg eines Zyklus der Wechselstrom-Spannungswellenform teilweise oder ganz festzulegen.

14. Elektronischer Stromwandler (20) nach einem der Ansprüche 11 bis 13, **dadurch gekennzeichnet, daß** die Wechselstrom-Spannungswellenform ziemlich annähernd eine Sinuswellenform ist.

15. Elektronischer Stromwandler (20) nach einem der Ansprüche 11 bis 14, **dadurch gekennzeichnet, daß** jeder Kettengliedwandler (38) so steuerbar ist, daß eine oder mehrere harmonische Nullphasen-Dreifach-Frequenzen in die Wechselstrom-Spannungswellenform eingebracht werden.

16. Elektronischer Stromwandler (20) nach einem der vorhergehenden Ansprüche, **dadurch gekennzeichnet, daß** wenigstens ein Modul mehrere der in Reihe geschalteten primären Schaltelemente aufweist, die mit der entsprechenden Energiespeicher-Vorrichtung parallel geschaltet sind.

17. Elektronischer Stromwandler (20) nach Anspruch 16, **dadurch gekennzeichnet, daß** die mehreren in Reihe geschalteten primären Schaltelemente mit der entsprechenden Energiespeicher-Vorrichtung in einer Halbbrücken-Anordnung parallel geschaltet sind, um dadurch einen 2-Quadrant, unipolaren Modul zu bilden, der Null Spannung oder positive Spannung erzeugen kann und Strom in zwei Richtungen leiten kann.

18. Elektronischer Stromwandler (20) nach Anspruch 16 oder Anspruch 17, **dadurch gekennzeichnet, daß** mehrere in Reihe geschaltete primäre Schaltelemente mit der entsprechenden Energiespeicher-Vorrichtung in einer Vollbrücken-Anordnung parallel geschaltet sind, um dadurch einen 4-Quadrant, bipolaren Modul zu bilden, der Null Spannung, positive Spannung oder negative Spannung erzeugen und Strom in zwei Richtungen leiten kann.

19. Elektronischer Stromwandler (20) nach einem der vorhergehenden Ansprüche, **dadurch gekennzeichnet, daß** wenigstens ein Schaltelement wenigstens eine Halbleiter-Vorrichtung aufweist.

20. Elektronischer Stromwandler (20) nach Anspruch 19, **dadurch gekennzeichnet, daß** die oder wenigstens eine Halbleiter-Vorrichtung ein isolierter bipolarer Gattertransistor, ein Gatterabschalttransistor, ein Feldeffekttransistor, ein injektionsverstärkter Gatterthyristor oder ein integrierter Gatterumschaltthyristor ist.

21. Elektronischer Stromwandler (20) nach Anspruch 19 oder Anspruch 20, **dadurch gekennzeichnet, daß** wenigstens ein Schaltelement auch eine antiparallele Diode aufweist, die mit der oder jeder entsprechenden Halbleiter-Vorrichtung parallel geschaltet ist.

22. Elektronischer Stromwandler (20) nach einem der vorhergehenden Ansprüche, **dadurch gekennzeichnet, daß** wenigstens eine Energiespeicher-Vorrichtung ein Kondensator ist oder einen Kondensator, eine Brennstoffzelle oder eine Batterie aufweist.

23. Elektronischer Stromwandler (20) nach einem der vorhergehenden Ansprüche, **dadurch gekennzeichnet, daß** jeder Zweigabschnitt (34, 36) eines entsprechenden Wandlerzweiges (22a, 22b, 22c) steuerbar ist, um selektiv einen Zirkulationsweg zu bestimmen, der einen Gleichstrom-Zirkulationsstrom aufnimmt, um das Energieniveau wenigstens einer Energiespeicher-Vorrichtung in einem entsprechenden Kettengliedwandler zu regeln.

24. Elektronischer Stromwandler (20) nach Anspruch 23, in Abhängigkeit von Anspruch 6, **dadurch gekennzeichnet, daß** der oder jeder Strommodifizierer steuerbar ist, um die Größe des Gleichstrom-Zirkulationsstrom so zu ändern, daß jegliche Abweichung in der Spannung der oder jeder Energiespeicher-Vorrichtung von einer vorbestimmten Spannungshöhe auf ein Mindestmaß beschränkt wird.

25. Elektronischer Stromwandler (20) nach Anspruch 23 oder Anspruch 24, **dadurch gekennzeichnet, daß** jeder Zweigabschnitt eines entsprechenden Wandlerzweigs steuerbar ist, um selektiv einen Zirkulationsweg zu bestimmen, der eine Kombination aus den Wechselstrom- und Gleichstrom-Zirkulationsströmen befördert.

26. Elektronischer Stromwandler (20) nach einem der vorhergehenden Ansprüche, **gekennzeichnet durch** multiple Wandlerzweige.

## Revendications

1. Convertisseur électronique de puissance (20), destiné à être utilisé dans une transmission de puissance en courant continu à haute tension et dans une compensation de puissance réactive, comprenant au moins une branche de convertisseur (22a, 22b, 22c) comprenant des première et deuxième bornes (24, 26) pouvant être raccordées à un réseau CC (30) et une troisième borne (28), la branche de convertisseur ou chaque branche de convertisseur (22a, 22b, 22c) définissant des première et deuxième portions de branche (34, 36) raccordées en série entre la troisième borne (28) et l'une respective des première et deuxième bornes (24, 26), chaque portion de branche (34, 36) comprenant un convertisseur en chaîne à maillons (38), chaque convertisseur en chaîne à maillons (38) comprenant une pluralité de modules raccordés en série, chaque module comprenant au moins un élément de commutation primaire raccordé à au moins un dispositif de stockage d'énergie, le convertisseur (20) étant configuré pour commander à la branche de convertisseur ou à chaque branche de convertisseur (22a, 22b, 22c) de commuter simultanément les deux portions de branche (34, 36) en circuit afin de définir sélectivement une voie de circulation portant un courant de circulation CA (54) à présenter au réseau CC (30) dans le but de minimiser une ondulation CC dans une tension CC présentée au réseau CC (30).

2. Convertisseur électronique de puissance (20) selon la revendication 1, dans lequel chaque portion de branche (34, 36) comprend en outre au moins un élément de commutation secondaire raccordé en série au convertisseur en chaîne à maillons (38), l'au moins un élément de commutation secondaire pouvant être commandé pour commuter sélectivement la portion de branche respective en circuit ou hors circuit.

3. Convertisseur électronique de puissance (20) selon la revendication 1 ou 2, dans lequel au moins deux branches de convertisseur (22a, 22b, 22c) peuvent être commandées en même temps pour commuter simultanément les deux portions de branche (34, 36) respectives en circuit afin de définir la voie de circulation.

4. Convertisseur électronique de puissance (20) selon l'une quelconque des revendications 1 à 3, dans lequel les branches de convertisseur (22a, 22b, 22c) peuvent être commandées séquentiellement pour commuter simultanément les deux portions de branche (34, 36) respectives en circuit afin de définir la voie de circulation.

5. Convertisseur électronique de puissance (20) selon l'une quelconque des revendications précédentes, dans lequel chaque branche de convertisseur (22a, 22b, 22c) peut être commandée pour définir sélectivement la voie de circulation pendant une période de chevauchement prédéterminée afin de commander la durée pendant laquelle le courant de circulation CA s'écoule.

6. Convertisseur électronique de puissance (20) selon l'une quelconque des revendications précédentes, dans lequel la voie de circulation comprend au moins un modificateur de courant pour modifier le courant de circulation CA.

7. Convertisseur électronique de puissance (20) selon la revendication 6, dans lequel le modificateur de courant ou chaque modificateur de courant est ou comprend au moins l'un des convertisseurs en chaîne à maillons et au moins un inducteur primaire raccordé en série au convertisseur en chaîne à maillons ou à chaque convertisseur en chaîne à maillons, le convertisseur en chaîne à maillons ou chaque convertisseur en chaîne à maillons étant utilisable pour varier sa tension afin de modifier la tension à travers l'inducteur primaire ou chaque inducteur primaire et de ce fait modifier la grandeur du courant de circulation CA.

8. Convertisseur électronique de puissance (20) selon la revendication 6 ou 7, dans lequel le modificateur de courant ou chaque modificateur de courant est ou comprend au moins un inducteur primaire variable, l'inducteur primaire variable ou chaque inducteur primaire variable pouvant être commandé pour varier son inductance afin de modifier le courant de circulation CA.

9. Convertisseur électronique de puissance (20) selon l'une quelconque des revendications précédentes, dans lequel l'élément de commutation primaire ou chaque élément de commutation primaire de chaque module de chaque convertisseur en chaîne à maillons (38) peut être commandé pour configurer le convertisseur en chaîne à maillons respectif afin de fournir une source de tension variable échelonnée.

10. Convertisseur électronique de puissance (20) selon l'une quelconque des revendications précédentes, dans lequel la troisième borne (28) de la branche de convertisseur ou de chaque branche de convertisseur (22a, 22b, 22c) peut être raccordée à une phase respective d'un réseau CA.

11. Convertisseur électronique de puissance (20) selon la revendication 10, dans lequel les convertisseurs en chaîne à maillons (38) peuvent être commandés pour générer une forme d'onde de tension CA à la troisième borne respective.

12. Convertisseur électronique de puissance (20) selon la revendication 11, dans lequel chaque convertisseur en chaîne à maillons (38) est utilisable pour varier sa tension afin de générer une forme d'onde de tension CA à la troisième borne respective (28) pendant qu'une voie de circulation est définie.

13. Convertisseur électronique de puissance selon la revendication 11 ou 12, dans lequel chaque branche de convertisseur (22a, 22b, 22c) peut être commandée pour définir la voie de circulation pour une partie ou l'intégralité d'un cycle de la forme d'onde de tension CA.

14. Convertisseur électronique de puissance (20) selon l'une quelconque des revendications 11 à 13, dans lequel la forme d'onde de tension CA est une approximation proche d'une forme d'onde sinusoïdale.

15. Convertisseur électronique de puissance (20) selon l'une quelconque des revendications 11 à 14, dans lequel chaque convertisseur en chaîne à maillons (38) peut être commandé pour injecter une ou plusieurs composantes d'harmoniques triples homopolaires dans la forme d'onde de tension CA.

16. Convertisseur électronique de puissance (20) selon l'une quelconque des revendications précédentes, dans lequel au moins un module comprend une pluralité d'éléments de commutation primaires raccordés en série qui sont raccordés en parallèle à un dispositif de stockage d'énergie respectif.

17. Convertisseur électronique de puissance (20) selon la revendication 16, dans lequel la pluralité d'éléments de commutation primaires raccordés en série sont raccordés en parallèle au dispositif de stockage d'énergie respectif dans un agencement en demi-pont pour définir un module unipolaire à deux quadrants pouvant fournir une tension nulle ou positive et pouvant conduire un courant dans deux sens.

18. Convertisseur électronique de puissance (20) selon la revendication 16 ou 17, dans lequel la pluralité d'éléments de commutation primaires raccordés en série sont raccordés en parallèle au dispositif de stockage d'énergie respectif dans un agencement en pont complet pour définir un module bipolaire à quatre quadrants pouvant fournir une tension nulle, positive ou négative et pouvant conduire un courant dans deux sens.

19. Convertisseur électronique de puissance (20) selon l'une quelconque des revendications précédentes, dans lequel au moins un élément de commutation comprend au moins un dispositif semi-conducteur.

20. Convertisseur électronique de puissance (20) selon la revendication 19, dans lequel le dispositif semi-conducteur ou au moins un dispositif semi-conducteur est un transistor bipolaire à grille isolé, un thyristor d'arrêt à grille, un transistor à effet de champ, un thyristor à grille amélioré à injection ou un thyristor commuté à grille intégré.

21. Convertisseur électronique de puissance (20) selon la revendication 19 ou 20, dans lequel au moins un élément de commutation comprend en outre une diode antiparallèle raccordée en parallèle au dispositif semi-conducteur correspondant ou à chaque dispositif semi-conducteur correspondant.

22. Convertisseur électronique de puissance (20) selon l'une quelconque des revendications précédentes, dans lequel au moins un dispositif de stockage d'énergie est ou comprend un condensateur, une pile à combustible ou une batterie.

23. Convertisseur électronique de puissance (20) selon l'une quelconque des revendications précédentes, dans lequel chaque portion de branche (34, 36) d'une branche de convertisseur respective (22a, 22b, 22c) peut être commandée pour définir sélectivement une voie de circulation portant un courant de circulation CC afin de réguler le niveau d'énergie d'au moins un dispositif de stockage d'énergie dans un convertisseur en chaîne à maillons respectif.

24. Convertisseur électronique de puissance (20) selon la revendication 23 lorsqu'elle est dépendante de la revendication 6, dans lequel le modificateur de courant ou chaque modificateur de courant peut être commandé pour modifier la grandeur du courant de circulation CC afin de minimiser tout écart de tension du dispositif de stockage d'énergie ou de chaque dispositif de stockage d'énergie par rapport à un niveau de tension prédéterminé.

25. Convertisseur électronique de puissance (20) selon la revendication 23 ou 24, dans lequel chaque portion de branche d'une branche de convertisseur respective peut être commandée pour définir sélectivement une voie de circulation portant une combinaison des courants de circulation CA et CC.

26. Convertisseur électronique de puissance (20) selon l'une quelconque des revendications précédentes, comprenant de multiples branches de convertisseur.
